# DEMANDE DE BREVET EUROPEEN

(11) **EP 2 457 429 A1**
(43) Date de publication de la demande: **30.05.2012**
(21) Numéro de dépôt: 11190140.1
(22) Date de dépôt: 22.11.2011
(51) Int. Cl.: A01B 63/114, A01B 63/00

(54) **Machine agricole a correction automatique d'assiette**

(30) Priorité: 30.11.2010 FR 1059894
(71) Demandeur: Agrotronix, 62138 Douvrin (FR); ETABLISSEMENTS FRANQUET, 02190 Guignicourt (FR)
(72) Inventeur: Lekeux, Olivier, 59553 Cuincy (FR); Braux, Thimothée, 59000 Lille (FR); Venel, Sébastien, 62113 Labourse (FR); Franquet, Benoist, 51100 Reims (FR); Bridoux, Jacky, 02190 Juvincourt et Damary (FR)
(74) Mandataire: Novagraaf Technologies

(57) **Abrégé**

L'invention concerne une machine agricole (M) portée ou semi-portée par un engin tracteur et comprenant un châssis dont l'assiette dépend notamment de la longueur d'un tirant qui le relie à cet engin tracteur.

La machine selon l'invention comprend un ou plusieurs moyens (31d, 31g) d'estimation du niveau de la partie avant du châssis, un ou plusieurs moyens (42d, 42g) d'estimation du niveau de la partie arrière du châssis, et un moyen de réglage asservi (5) recevant les signaux produits par les moyens d'estimation de niveau ou d'inclinaison, le tirant comprenant un vérin (240) dont la longueur est contrôlée par ce moyen de réglage asservi (5) de manière que le châssis adopte une assiette horizontale.

## Description

L'invention concerne, de façon générale, le domaine des machines agricoles.

Plus précisément, l'invention concerne une machine agricole conçue pour être tractée sur le sol, par un engin tracteur, suivant une direction d'avancement, cette machine comprenant un châssis présentant une partie arrière, deux côtés respectivement droit et gauche, et une partie avant incluant une partie frontale, des moyens d'attelage liés à la partie frontale du châssis, et des outils de traitement du sol supportés par le châssis, les moyens d'attelage comprenant au moins des premier et deuxième pivots conçus pour réaliser une articulation du châssis respectivement sur des premier et deuxième points d'ancrage liés à l'engin tracteur, un tirant de longueur réglable présentant des première et deuxième extrémités, et un troisième pivot sur lequel est articulée la première extrémité du tirant, la deuxième extrémité du tirant étant conçue pour être articulée sur un troisième point d'ancrage lié à l'engin tracteur, les pivots étant non alignés, et le troisième pivot étant disposé à un niveau différent du niveau de chacun des premier et deuxième pivots.

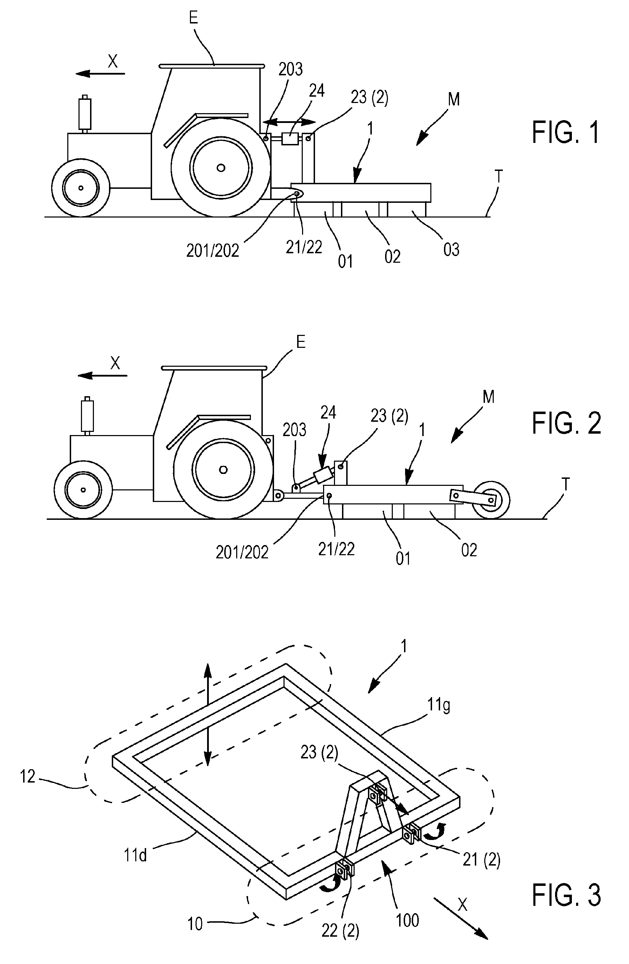

Les machines agricoles de ce type sont bien connues et comprennent notamment les machines dites "portées", dont un exemple est illustré de façon schématique à la figure 1, et les machines dites "semi-portées", dont un exemple est illustré de façon schématique à la figure 2.

La seule différence entre ces deux types de machines réside dans le fait que l'équilibre statique des machines portées est assuré en compensant totalement le poids de ces machines par les efforts que transmettent les moyens d'attelage aux points d'ancrage liés à l'engin tracteur, alors que l'équilibre statique des machines semi-portées est assuré partiellement par ces efforts, et partiellement par l'appui sur le sol d'une roue équipant l'arrière du châssis.

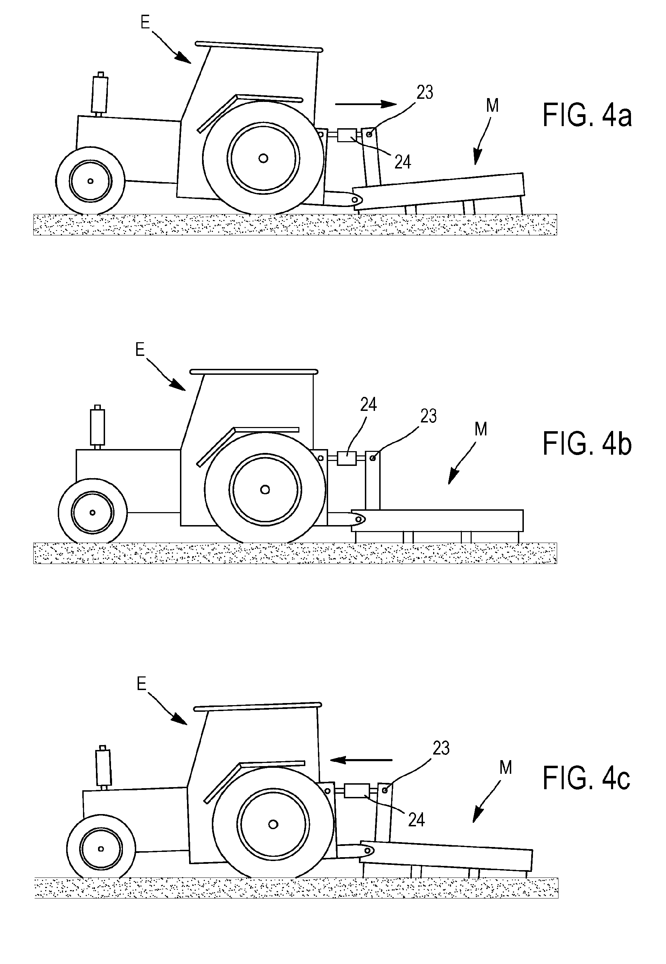

Dans tous les cas, il est très souhaitable que la machine adopte une assiette horizontale telle qu'illustrée à la figure 4b, et non une assiette plongeante telle qu'illustrée à la figure 4a, ni une assiette cabrée telle qu'illustrée à la figure 4c.

Pour ce faire, il est connu de régler manuellement la longueur du tirant reliant le troisième pivot de la machine au troisième point d'ancrage lié à l'engin tracteur.

Cependant, outre le fait que ce réglage est assez long et fastidieux, il ne permet en fait que d'assurer l'équilibre statique de la machine, c'est-à-dire son assiette horizontale au repos, qui diffère de son assiette en cours d'utilisation.

En effet, ces machines embarquent généralement un ou plusieurs outils de préparation du sol, portés par le châssis, et par exemple constitués d'une spire pour casser les mottes, d'un vibro-culteur, ou d'un rouleau compacteur.

Or, les interactions entre ces outils et le sol, qui dépendent de très nombreux facteurs tels que la nature de chaque outil, la profondeur de travail de chaque outil, la position de chaque outil sur la machine, la nature du sol, son taux d'humidité, sa dureté, etc., produisent une force de traînée variable qui non seulement a pour effet que l'assiette de la machine n'est pas la même au repos et en cours d'utilisation, mais qui a également pour effet que l'assiette de cette machine évolue au cours de son utilisation.

Dans ce contexte, l'invention a pour but de proposer une machine agricole plus efficace et d'utilisation plus aisée, que cette machine soit portée ou semi-portée.

A cette fin, la machine de l'invention, par ailleurs conforme à la définition générique qu'en donne le préambule ci-dessus, est essentiellement caractérisée en ce qu'elle comprend en outre un premier moyen d'estimation de niveau ou d'inclinaison conçu pour délivrer au moins un premier signal, un deuxième moyen d'estimation de niveau ou d'inclinaison conçu pour délivrer au moins un deuxième signal, et un moyen de réglage asservi, en ce que le tirant comprend un vérin à double effet présentant une longueur variable en fonction d'une commande et déterminant la longueur du tirant, et en ce que le moyen de réglage asservi est relié aux premier et deuxième moyens d'estimation de niveau ou d'inclinaison et au vérin, ce moyen de réglage asservi étant conçu pour produire et appliquer au vérin, en fonction au moins des premier et deuxième signaux, ladite commande dans un sens propre à maintenir ou à corriger l'assiette de la machine sur le sol.

Dans un premier mode de réalisation possible de l'invention, il est prévu par exemple que le premier moyen d'estimation de niveau ou d'inclinaison comprenne au moins un premier palpeur lié à la partie avant du châssis et un premier capteur de position, que le deuxième moyen d'estimation de niveau comprenne au moins un deuxième palpeur lié à la partie arrière du châssis et un deuxième capteur de position, que les premier et deuxième palpeurs soient mobiles par rapport à un même niveau de référence et sollicités par des forces respectives qui les appliquent sur le sol, et que les premier et deuxième capteurs de position produisent respectivement, en tant que premier et deuxième signaux, des signaux variant avec la distance entre le niveau de référence et les premier et deuxième palpeurs respectifs.

Par exemple, cette machine comprend des premier et deuxième patins dotés d'extrémités libres respectives qui glissent en fonctionnement sur le sol et qui constituent lesdits premier et deuxième palpeurs.

Les premier et deuxième patins peuvent notamment être montés mobiles en rotation autour d'axes de rotation respectifs disposés au niveau de référence.

Dans une variante avancée du premier mode de réalisation de cette machine, il peut être prévu que le premier moyen d'estimation de niveau ou d'inclinaison comprenne une première paire de patins respectivement droit et gauche disposés dans la partie avant du châssis respectivement sur les côtés droit et gauche, que le deuxième moyen d'estimation de niveau ou d'inclinaison comprenne une deuxième paire de patins respectivement droit et gauche disposés dans la partie arrière du châssis respectivement sur les côtés droit et gauche, que chaque patin de la première paire de patins soit monté à la manière du premier patin tel qu'évoqué précédemment, et que chaque patin de la deuxième paire de patins soit monté à la manière du deuxième patin tel qu'évoqué précédemment.

Une telle machine agricole peut être réalisée à partir d'une machine existante modifiée de manière à comprendre des première et deuxième plaques de tôle respectivement liées aux côtés droit et gauche du châssis par des liaisons respectives à parallélogramme déformable, et sur lesquelles sont respectivement définis les axes de rotation respectifs des patins droits et gauches.

Il est notamment possible de prévoir que le premier capteur de position comprenne un premier capteur de rotation droit délivrant, en tant que composante droite du premier signal, un signal représentatif de l'inclinaison du patin droit de la première paire de patins et un premier capteur de rotation gauche délivrant, en tant que composante gauche du premier signal, un signal représentatif de l'inclinaison du patin gauche de la première paire de patins, et que le deuxième capteur de position comprenne un deuxième capteur de rotation droit délivrant, en tant que composante droite du deuxième signal, un signal représentatif de l'inclinaison du patin droit de la deuxième paire de patins et un deuxième capteur de rotation gauche délivrant, en tant que composante gauche du deuxième signal, un signal représentatif de l'inclinaison du patin gauche de la deuxième paire de patins.

Dans tous les cas, le moyen de réglage asservi comprend avantageusement une unité de calcul élaborant au moins un signal d'erreur dépendant d'un écart entre les premier et deuxième signaux.

En particulier, l'unité de calcul peut comprendre des moyens pour élaborer une composante droite du signal d'erreur par différence entre les composantes droites respectives des premier et deuxième signaux, des moyens pour élaborer une composante gauche du signal d'erreur par différence entre les composantes gauches respectives des premier et deuxième signaux, et des moyens pour élaborer le signal d'erreur par sommation des composantes droite et gauche de ce signal d'erreur.

Dans un deuxième mode possible de réalisation, la machine peut comprendre au moins un ski relié au châssis de façon articulée pour glisser librement sur le sol dans la direction d'avancement, le premier moyen d'estimation de niveau ou d'inclinaison comprenant alors un premier inclinomètre lié au châssis et fournissant, en tant que premier signal, un signal variant avec l'inclinaison du châssis dans un plan vertical parallèle à la direction d'avancement, et le deuxième moyen d'estimation de niveau ou d'inclinaison comprenant un deuxième inclinomètre lié au ski et fournissant, en tant que deuxième signal, un signal variant avec l'inclinaison du ski dans le plan vertical parallèle à la direction d'avancement.

Dans chacun des modes de réalisation, l'unité de calcul comprend de préférence des moyens pour élaborer une consigne au moins par filtrage basse fréquence dudit signal d'erreur, le moyen de réglage asservi comprenant lui-même des organes effecteurs pilotés par ladite unité de calcul et produisant ladite commande en fonction de ladite consigne.

D'autres caractéristiques et avantages de l'invention ressortiront clairement de la description qui en est faite ci-après, à titre indicatif et nullement limitatif, en référence aux dessins annexés, dans lesquels .
- la figure 1 est une vue schématique en élévation d'un attelage connu auquel l'invention est applicable, cet attelage comprenant un engin tracteur et une machine agricole portée;
- la figure 2 est une vue schématique en élévation d'un attelage connu auquel l'invention est applicable, cet attelage comprenant un engin tracteur et une machine agricole semi-portée;
- la figure 3 est une vue en perspective d'un châssis utilisable dans une machine agricole portée ou semi-portée;
- les figures 4a, 4b, et 4c sont des vues en élévation d'un attelage tel qu'illustré à la figure 1, la machine agricole étant représentée avec une assiette plongeante sur la figure 4a, avec une assiette horizontale sur la figure 4b, et avec une assiette cabrée sur la figure 4c;
- la figure 5 est une vue schématique en élévation de divers éléments susceptibles d'être ajoutés à une machine agricole connue pour la transformer en une machine conforme à un premier mode de réalisation possible de l'invention;
- la figure 6 est une vue illustrant à plus grande échelle certains des éléments illustrés à la figure 5;
- la figure 7 est une vue schématique en élévation d'une machine agricole représentée en cours d'utilisation et comportant les éléments illustrés aux figures 5 et 6;
- la figure 8 est une vue schématique d'une plaque de tôle appartenant aux éléments illustrés aux figures 5 à 7 et observée de face, c'est-à-dire suivant la direction d'avancement de la machine;
- la figure 9 est un schéma fonctionnel global des éléments équipant une machine conforme au premier mode de réalisation possible de l'invention;
- la figure 10 est une vue en élévation détaillée d'un exemple de machine conforme au premier mode de réalisation, sur laquelle les patins ont été omis par souci de clarté;
- la figure 11 est une vue en perspective à échelle agrandie d'un détail difficilement visible sur la figure 10; et
- la figure 12 est une vue schématique partielle en élévation d'une machine agricole conforme à un deuxième mode de réalisation possible de l'invention.

Les principaux éléments illustrés sur ces figures et invoqués dans la présente description sont repérés par des références entre parenthèses ou non, les références entre parenthèses étant affectées aux ensembles auxquels appartiennent les éléments repérés par des références sans parenthèses.

Comme annoncé précédemment, l'invention concerne une machine agricole M conçue pour être tractée sur le sol T par un engin tracteur E, suivant une direction d'avancement X, unique ou privilégiée.

Cette machine comprend notamment un châssis 1, des moyens d'attelage 2 liés au châssis, et des outils de traitement du sol, tels que 01, 02, 03, supportés par ce châssis 1.

Le châssis 1, généralement de forme quadrangulaire, présente une partie arrière 12, deux côtés 11d et 11g respectivement droit et gauche, et une partie avant 10 incluant une partie frontale 100 portant les moyens d'attelage 2.

Ces moyens d'attelage 2 comprennent typiquement trois pivots 21, 22, et 23 et un tirant 24 de longueur réglable, les pivots 21, 22 et 23 étant destinés à être fixés, directement ou non, à trois points d'ancrage respectifs 201, 202, et 203 eux-mêmes portés par l'engin tracteur E ou liés à cet engin.

Comme le montre la figure 3, les pivots sont généralement agencés en triangle isocèle, et en tout cas non alignés, les pivots 21 et 22 étant disposés symétriquement, de part et d'autre d'un plan vertical médian, sur une traverse horizontale de la partie frontale 100 du châssis, et le pivot 23 étant disposé, dans ce plan vertical médian, au-dessus de cette traverse.

Plus précisément, les pivots 21 et 22 sont conçus pour réaliser une articulation du châssis 1 sur les points d'ancrage respectifs 201 et 202.

Dans le cas des machines portées (figure 1), les points d'ancrage 201 et 202 sont respectivement formés sur les bras de relevage de l'engin tracteur E.

Dans le cas des machines semi-portées, les points d'ancrage 201 et 202 sont définis sur un timon B lui-même articulé sur l'engin tracteur E.

L'extrémité arrière du tirant 24 est articulée sur le troisième pivot 23 et l'extrémité avant de ce tirant 24 est, en état de fonctionnement, articulée sur le troisième point d'ancrage 203.

Dans le cas des machines portées (figure 1), le troisième point d'ancrage 203 est défini sur l'engin tracteur E lui-même, alors que, dans le cas des machines semi-portées (figure 2), le troisième point d'ancrage est défini sur le timon B.

Dans tous les cas de figures, l'assiette de la machine M dépend, entre autres paramètres, de la longueur du tirant 24, ce dernier étant généralement constitué par une double tige filetée dans l'art antérieur.

Lorsque le tirant 24 présente une longueur insuffisante, la machine M a tendance à adopter une assiette plongeante (figure 4a) qui ne peut être corrigée que par un allongement de ce tirant, c'est-à-dire par un déplacement du pivot 23 vers l'arrière comme indiqué par la flèche sur cette figure 4a.

Inversement, lorsque le tirant 24 présente une longueur trop importante, la machine M a tendance à adopter une assiette cabrée (figure 4c) qui ne peut être corrigée que par un raccourcissement de ce tirant, c'est-à-dire par un déplacement du pivot 23 vers l'avant comme indiqué par la flèche sur cette figure 4c.

Pour éviter ces effets indésirables et permettre à la machine M d'adopter une assiette horizontale telle qu'illustrée à la figure 4b, cette machine comprend deux moyens 3 et 4 d'estimation de niveau ou d'inclinaison ainsi qu'un moyen de réglage asservi 5, le tirant 24 comprenant lui-même un vérin 240.

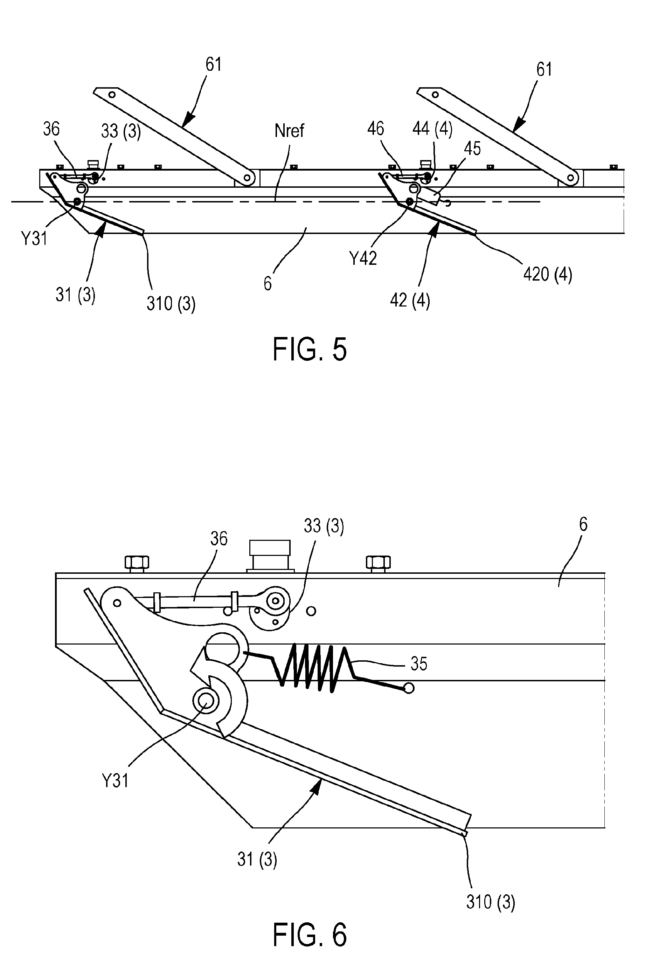

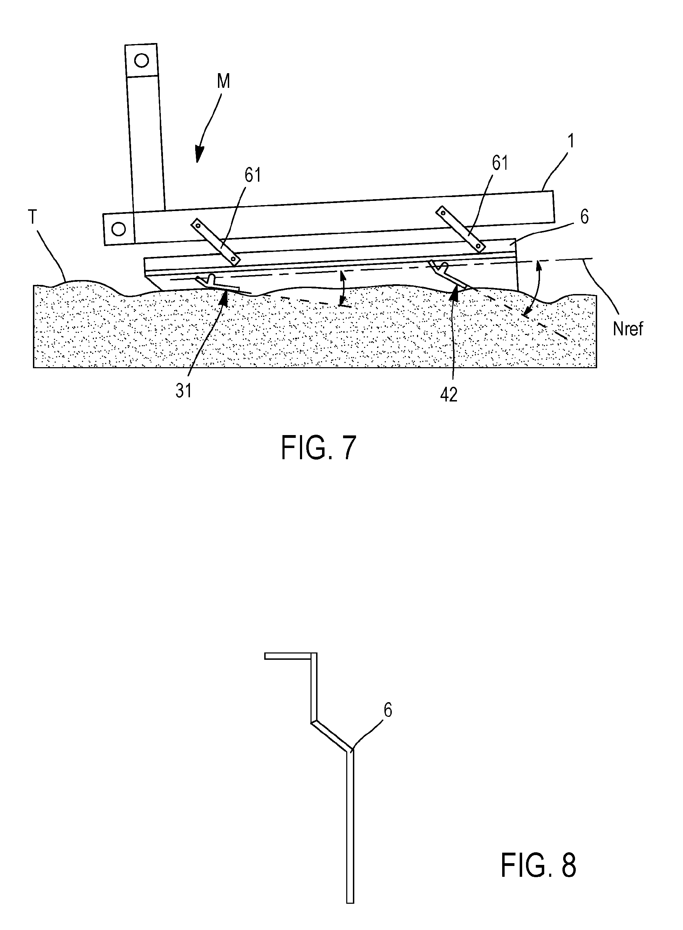

Dans le premier mode de réalisation, qui est illustré essentiellement aux figures 5 à 11, les moyens 3 et 4 d'estimation de niveau ou d'inclinaison comprennent un moyen antérieur 3 d'estimation de niveau et un moyen postérieur 4 d'estimation de niveau.

Le vérin 240 est un vérin à double effet, de sorte que sa longueur, qui détermine la longueur du tirant 24 et qui est variable en fonction d'une commande K, permet d'augmenter ou de diminuer à volonté la longueur du tirant 24.

Dans le premier mode de réalisation de l'invention, le moyen 3 d'estimation de niveau, qui est lié à la partie avant 10 du châssis 1, est conçu pour délivrer un signal S1 représentatif de la distance séparant le sol T de la partie avant 10 du châssis 1.

De façon analogue, le moyen 4 d'estimation de niveau, qui est lié à la partie arrière 12 du châssis, est conçu pour délivrer un signal S2 représentatif de la distance séparant le sol T de la partie arrière 12 du châssis 1,

Le moyen de réglage asservi 5, qui est relié à la fois aux moyens 3 et 4 d'estimation de niveau et au vérin 240, est quant à lui conçu, quel que soit le mode de réalisation, pour produire et pour appliquer au vérin 240, en fonction des signaux S1 et S2, la commande K dans un sens propre à maintenir ou à corriger l'assiette de la machine M sur le sol T.

Dans le premier mode de réalisation illustré, chaque moyen d'estimation de niveau comprend un ou plusieurs palpeurs et un nombre identique de capteurs de position correspondants.

Par exemple, le moyen 3 d'estimation de niveau comprend (figures 5 et 6) un palpeur 310 et un capteur de position 33, et le moyen 4 d'estimation de niveau comprend un palpeur 420 et un capteur de position 44.

Chacun des palpeurs tels que 310 et 420 est mobile par rapport à un même niveau de référence Nref et se trouve sollicité par une force qui l'applique sur le sol T, par exemple par une force élastique exercée par un ressort tel que 35 ou 45.

Par ailleurs, les capteurs de position 33 et 44 produisent respectivement, en tant que signaux S1 et S2, des signaux variant avec la distance entre le niveau de référence Nref et les palpeurs respectifs 310 et 420.

Comme le montrent les figures 5 et 6, les palpeurs 310 et 420 peuvent être constitués par les extrémités libres de patins respectifs 31 et 42 qui, en fonctionnement, glissent à la surface du sol T.

Dans ce cas, comme le montrent encore les figures 5 et 6, les patins 31 et 42 peuvent être montés mobiles en rotation autour d'axes de rotation respectifs Y31 et Y42, qui sont disposés au niveau de référence Nref.

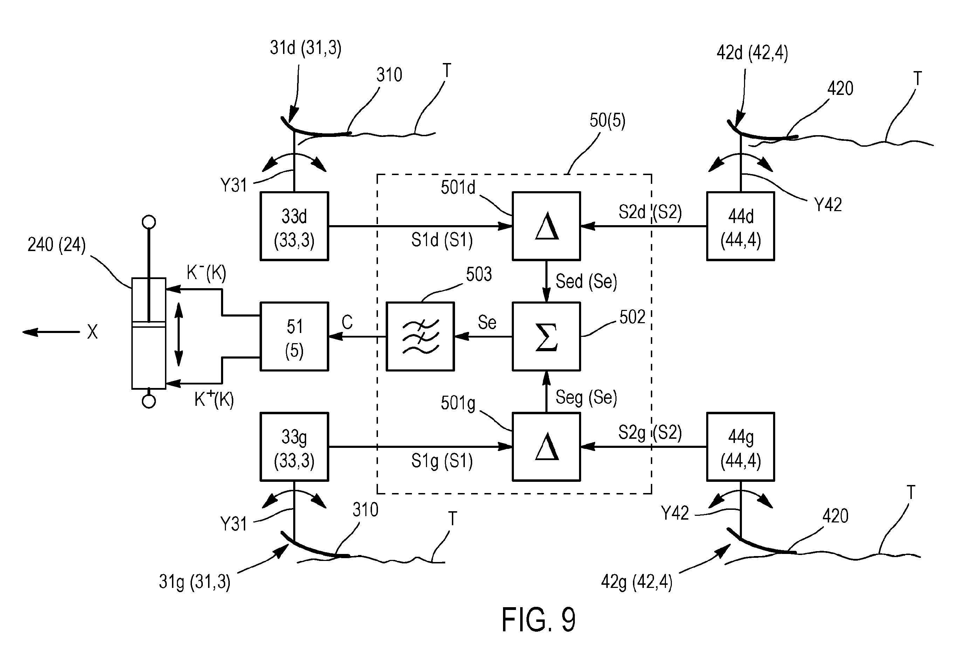

Dans un mode de réalisation plus avancé, chaque moyen d'estimation de niveau comprend une paire de palpeurs et une paire de capteurs de position correspondants (figure 9).

Dans ce cas, le moyen 3 d'estimation de niveau comprend une paire de patins respectivement droit et gauche, 31d et 31g, disposés dans la partie avant 10 du châssis respectivement sur les côtés droit et gauche, et le moyen 4 d'estimation de niveau comprend une autre paire de patins respectivement droit et gauche, 42d et 42g, disposés dans la partie arrière 12 du châssis respectivement sur les côtés droit et gauche.

Chacun des patins 31d et 31g est monté comme indiqué précédemment pour le patin 31, et chacun des patins 42d et 42g est monté comme indiqué précédemment pour le patin 42.

Pour simplifier la fabrication de la machine de l'invention, ou équiper une machine existante conformément à l'invention, il peut être judicieux de doter cette machine de deux plaques de tôle 6 dont l'une est montée sur le côté droit 11d du châssis et porte les patins 31d et 42d, et dont l'autre est montée sur le côté gauche 11g du châssis et porte les patins 31g et 42g, des axes de rotation Y31 et Y42 étant donc définis sur chacune de ces plaques 6 pour le montage en rotation de ces patins.

Chacune de ces plaques 6 est liée au côté correspondant du châssis 1 au moyen de bras 61 définissant un parallélogramme déformable qui est en permanence ramené par gravité vers une configuration de repos dans laquelle ce parallélogramme forme un rectangle, cette plaque 6 ayant ainsi vocation à s'enfoncer dans le sol T alors que les patins qu'elle porte glissent à la surface du sol.

Le montage de chaque plaque 6 par une liaison à parallélogramme déformable 61 permet à cette plaque de s'escamoter au cas où elle rencontre un obstacle tel qu'une pierre.

Dans le cas où deux paires de patins sont utilisés, et où chaque patin est monté en rotation autour d'un axe tel que Y31 ou Y42, le capteur de position 33 comprend (figure 9) un capteur de rotation droit 33d délivrant, en tant que composante droite S1d du signal S1, un signal représentatif de l'inclinaison du patin droit 31d de la paire de patins 31d et 31g, et un capteur de rotation gauche 33g délivrant, en tant que composante gauche S1g du signal S1, un signal représentatif de l'inclinaison du patin gauche 31g de cette paire de patins 31d, 31g.

De même, le capteur de position 44 comprend un capteur de rotation droit 44d délivrant, en tant que composante droite S2d du signal S2, un signal représentatif de l'inclinaison du patin droit 42d de la paire de patins 42d et 42g, et un capteur de rotation gauche 42g délivrant, en tant que composante gauche S2g du signal S2, un signal représentatif de l'inclinaison du patin gauche 42g de cette paire de patins 42d, 42g.

Comme le montre notamment la figure 6, chaque patin peut être relié au capteur de rotation correspondant par une biellette telle que 36 ou 46 de manière que le signal fourni par ce capteur présente une amplitude et une linéarité suffisantes.

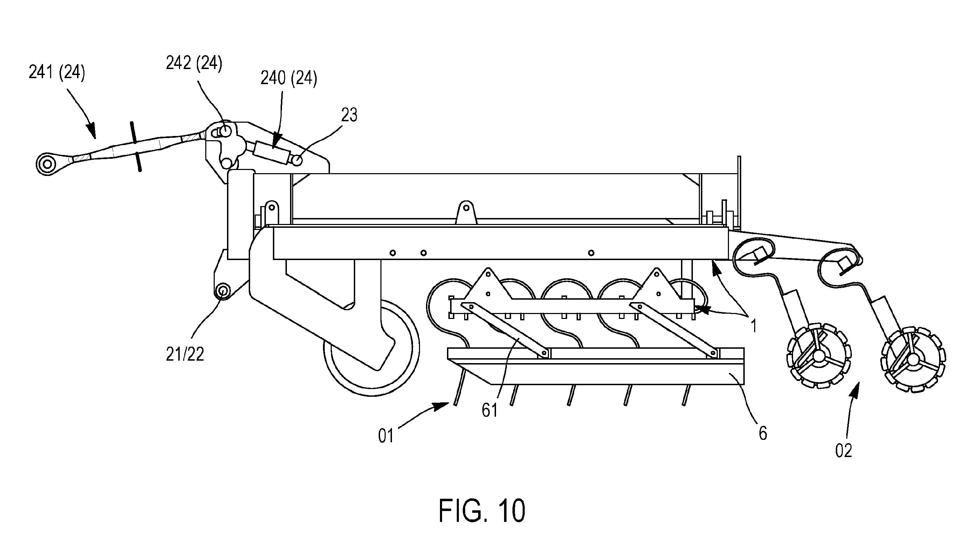

Comme le montre la figure 10, le tirant 24 peut comporter une double tige filetée 241 se raccordant au vérin 240 par un point de liaison intermédiaire 242.

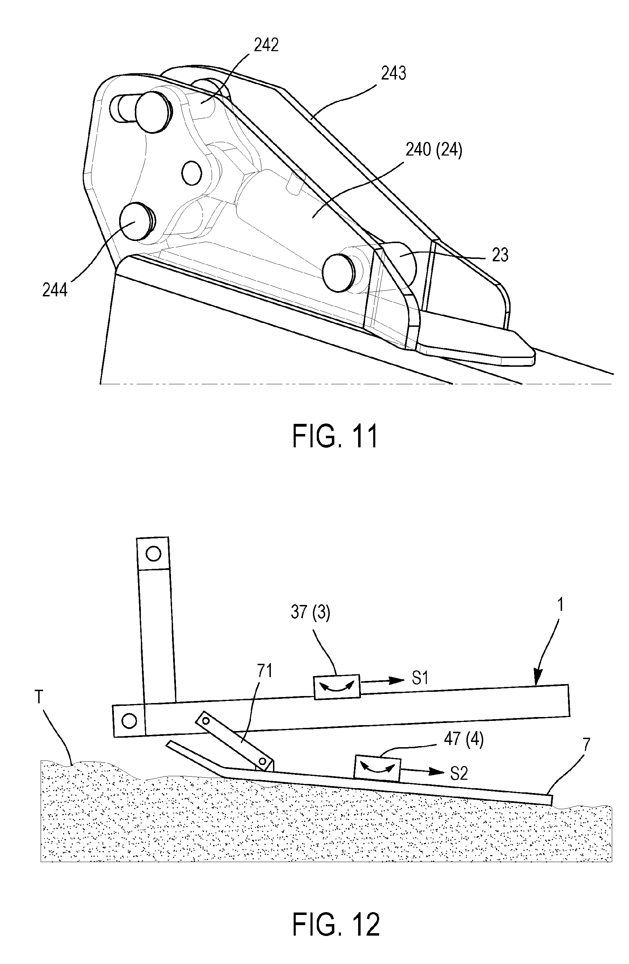

Le vérin 240 est alors par exemple monté dans une chape 243 (figure 11) pour déplacer le point de liaison intermédiaire 242 par rapport à un axe de rotation 244.

Bien que cet agencement puisse éventuellement requérir un réglage manuel grossier et occasionnel de la longueur de la double tige filetée 241, il permet d'utiliser un vérin plus court, donc moins coûteux, tout en conservant le bénéfice d'un ajustement dynamique de l'assiette de la machine.

Quel que soit le mode de réalisation de cette machine, et comme le montre la figure 9, le moyen de réglage asservi 5 comprend avantageusement une unité de calcul 50 conçue pour élaborer au moins un signal d'erreur Se dépendant de l'écart entre les signaux S1 et S1.

Dans le cas particulier où la machine comprend deux paires de patins, cette unité de calcul 50 peut comprendre:
- des moyens 501d pour élaborer une composante droite Sed du signal d'erreur Se par différence entre les composantes droites respectives S1d et S2d des signaux S1 et S2,
- des moyens 501g pour élaborer une composante gauche Seg du signal d'erreur Se par différence entre les composantes gauches respectives S1g et S2g des signaux S1 et S2,
- des moyens 502 pour élaborer le signal d'erreur Se par sommation des composantes droite et gauche Sed et Seg de ce signal d'erreur Se, et
- des moyens 503 pour élaborer une consigne C au moins par filtrage basse fréquence du signal d'erreur Se.

Cette architecture fonctionnelle est particulièrement bien adaptée au cas où les patins sont montés sur des plaques escamotables 6 puisque, dans la mesure où chacun des signaux d'erreur Sed et Seg est obtenu par différence, et où les plaques 6 restent parallèles au châssis, chacun de ces signaux d'erreur Sed et Seg est insensible à la profondeur d'enfoncement de la plaque 6 correspondante.

Le filtre passe-bas 503, qui a pour fonction de filtrer le bruit dû aux aspérités du terrain T, permet d'obtenir, en tant que consigne C, un signal relativement stable dans le temps et représentatif de la différence angulaire moyenne entre les patins antérieurs et les patins postérieurs.

Dans un autre mode de réalisation de l'invention, illustrée à la figure 12, la machine comprend une luge ou un ski 7 relié au châssis 1 de façon articulée pour glisser librement sur le sol T dans la direction d'avancement X.

L'articulation de cette luge ou de ce ski 7 est réalisée au moyen d'un ou plusieurs bras de liaison 71 dont une extrémité supérieure pivote par rapport au châssis 1 et dont une extrémité inférieure pivote par rapport à cette luge ou à ce ski, de sorte que la luge ou le ski 7 s'applique sur le sol T et en prend l'inclinaison tout en permettant au châssis 1 d'être plus ou moins distant de la surface du sol T.

Le premier moyen 3 d'estimation de niveau ou d'inclinaison peut alors être constitué par un inclinomètre 37 lié au châssis 1 et fournissant, en tant que premier signal S1, un signal variant avec l'inclinaison du châssis 1 dans un plan vertical parallèle à la direction d'avancement X.

Le deuxième moyen 4 d'estimation de niveau ou d'inclinaison peut quant à lui être constitué par un inclinomètre 47 lié au ski ou à la luge 7 et fournissant, en tant que deuxième signal S2, un signal variant avec l'inclinaison de ce ski ou cette luge 7 dans le plan vertical parallèle à la direction d'avancement X.

Comme dans le premier mode de réalisation, le moyen de réglage asservi 5 comprend avantageusement une unité de calcul 50 conçue pour élaborer au moins un signal d'erreur Se dépendant de l'écart entre les signaux S1 et S2 et incluant un filtre passe-bas tel que 503, dont la fonction est de filtrer le bruit dû aux aspérités du terrain T et d'élaborer, en tant que consigne C, un signal relativement stable dans le temps et représentatif de la différence entre les inclinaisons respectives du châssis 1 et du ski ou de la luge 7.

Enfin, quel que soit le mode de réalisation de l'invention, le moyen de réglage asservi 5 comprend de préférence des organes effecteurs 51 (figure 9) incluant par exemple, dans le cas où le vérin 240 est constitué par un vérin hydraulique, une pompe hydraulique, un réservoir et des électrovalves, selon des technologies maîtrisées par l'homme du métier.

Ces organes effecteurs 51, qui sont pilotés par l'unité de calcul 50, sont conçus pour appliquer sur le vérin 240 la commande K en fonction de la consigne C que ces organes effecteurs reçoivent de l'unité de calcul 50.

En particulier, ces organes effecteurs peuvent donc appliquer au vérin 240 une commande K- qui réduit la longueur de ce vérin, et donc la longueur du tirant 24 en cas de détection d'une assiette cabrée de la machine M (figure 4c), ou une commande K+ qui augmente la longueur de ce vérin, et donc aussi la longueur du tirant 24 en cas de détection d'une assiette plongeante de la machine M (figure 4a).

## Revendications

1. Machine agricole (M) conçue pour être tractée sur le sol (T), par un engin tracteur (E), suivant une direction d'avancement (X), cette machine comprenant un châssis (1) présentant une partie arrière (12), deux côtés (11d, 11g) respectivement droit et gauche, et une partie avant (10) incluant une partie frontale (100), des moyens d'attelage (2) liés à la partie frontale (100) du châssis, et des outils (01, 02, 03) de traitement du sol supportés par le châssis (1), les moyens d'attelage (2) comprenant au moins des premier et deuxième pivots (21, 22) conçus pour réaliser une articulation du châssis (1) respectivement sur des premier et deuxième points d'ancrage (201, 202) liés à l'engin tracteur (E), un tirant (24) de longueur réglable présentant des première et deuxième extrémités, et un troisième pivot (23) sur lequel est articulée la première extrémité du tirant (24), la deuxième extrémité du tirant (24) étant conçue pour être articulée sur un troisième point d'ancrage (203) lié à l'engin tracteur (E), les pivots (21, 22, 23) étant non alignés, et le troisième pivot (23) étant disposé à un niveau différent du niveau de chacun des premier et deuxième pivots (21, 22), **caractérisée en ce qu'**elle comprend en outre un premier moyen (3) d'estimation de niveau ou d'inclinaison conçu pour délivrer au moins un premier signal (S1), un deuxième moyen (4) d'estimation de niveau ou d'inclinaison conçu pour délivrer au moins un deuxième signal (S2), et un moyen de réglage asservi (5), **en ce que** le tirant (24) comprend un vérin à double effet (240) présentant une longueur variable en fonction d'une commande (K) et déterminant la longueur du tirant (24), et **en ce que** le moyen de réglage asservi (5) est relié aux premier et deuxième moyens (3, 4) d'estimation de niveau ou d'inclinaison et au vérin (240), ce moyen de réglage asservi (5) étant conçu pour produire et appliquer au vérin (240), en fonction au moins des premier et deuxième signaux (S1, S2), ladite commande (K) dans un sens propre à maintenir ou à corriger l'assiette de la machine (M) sur le sol (T).

2. Machine agricole suivant la revendication 1, **caractérisée en ce que** le premier moyen (3) d'estimation de niveau ou d'inclinaison comprend au moins un premier palpeur (310) lié à la partie avant (10) du châssis (1) et un premier capteur de position (33), **en ce que** le deuxième moyen (4) d'estimation de niveau ou d'inclinaison comprend au moins un deuxième palpeur (420) lié à la partie arrière (12) du châssis (1) et un deuxième capteur de position (44), **en ce que** les premier et deuxième palpeurs (310, 420) sont mobiles par rapport à un même niveau de référence (Nref) et sollicités par des forces respectives qui les appliquent sur le sol (T), et **en ce que** les premier et deuxième capteurs de position (33, 44) produisent respectivement, en tant que premier et deuxième signaux (S1, S2), des signaux variant avec la distance entre le niveau de référence (Nref) et les premier et deuxième palpeurs respectifs (310, 420).

3. Machine agricole suivant la revendication 2, **caractérisée en ce qu'**elle comprend des premier et deuxième patins (31, 42) dotés d'extrémités libres respectives (310, 420) qui glissent en fonctionnement sur le sol (T) et qui constituent lesdits premier et deuxième palpeurs (310, 420).

4. Machine agricole suivant la revendication 3, **caractérisée en ce que** les premier et deuxième patins (31, 42) sont montés mobiles en rotation autour d'axes de rotation respectifs (Y31, Y42) disposés au niveau de référence (Nref).

5. Machine agricole suivant l'une quelconque des revendications 3 et 4, **caractérisée en ce que** le premier moyen (3) d'estimation de niveau ou d'inclinaison comprend une première paire (31d, 31g) de patins respectivement droit et gauche disposés dans la partie avant (10) du châssis respectivement sur les côtés droit et gauche, **en ce que** le deuxième moyen (4) d'estimation de niveau ou d'inclinaison comprend une deuxième paire (42d, 42g) de patins respectivement droit et gauche disposés dans la partie arrière (12) du châssis respectivement sur les côtés droit et gauche, **en ce que** chaque patin (31d, 31g) de la première paire de patins est monté à la manière du premier patin (31), et **en ce que** chaque patin (42d, 42g) de la deuxième paire de patins est monté à la manière du deuxième patin (42).

6. Machine agricole suivant la revendication 5, **caractérisée en ce qu'**elle comprend des première et deuxième plaques de tôle (6) respectivement liées aux côtés droit et gauche (11d, 11g) du châssis (1) par des liaisons respectives (61) à parallélogramme déformable, et sur lesquelles sont respectivement définis les axes de rotation respectifs (Y31, Y42) des patins droits et gauches (31d, 31g, 42d, 42g).

7. Machine agricole suivant l'une quelconque des revendications 5 et 6, **caractérisée en ce que** le premier capteur de position (33) comprend un premier capteur de rotation droit (33d) délivrant, en tant que composante droite (S1d) du premier signal (S1), un signal représentatif de l'inclinaison du patin droit (31d) de la première paire de patins (31d, 31g) et un premier capteur de rotation gauche (33g) délivrant, en tant que composante gauche (S1g) du premier signal (S1), un signal représentatif de l'inclinaison du patin gauche (31g) de la première paire de patins (31d, 31g), et **en ce que** le deuxième capteur de position (44) comprend un deuxième capteur de rotation droit (44d) délivrant, en tant que composante droite (S2d) du deuxième signal (S2), un signal représentatif de l'inclinaison du patin droit (42d) de la deuxième paire de patins (42d, 42g) et un deuxième capteur de rotation gauche (42g) délivrant, en tant que composante gauche (S2g) du deuxième signal (S2), un signal représentatif de l'inclinaison du patin gauche (42g) de la deuxième paire de patins (42d, 42g).

8. Machine agricole suivant l'une quelconque des revendications précédentes, **caractérisée en ce que** le moyen de réglage asservi (5) comprend une unité de calcul (50) élaborant au moins un signal d'erreur (Se) dépendant d'un écart entre les premier et deuxième signaux (S1, S2).

9. Machine agricole suivant les revendications 7 et 8, **caractérisée en ce que** l'unité de calcul (50) comprend des moyens (501d) pour élaborer une composante droite (Sed) du signal d'erreur (Se) par différence entre les composantes droites respectives (S1d, S2d) des premier et deuxième signaux (S1, S2), des moyens (501g) pour élaborer une composante gauche (Seg) du signal d'erreur (Se) par différence entre les composantes gauches respectives (S1g, S2g) des premier et deuxième signaux (S1, S2), et des moyens (502) pour élaborer le signal d'erreur (Se) par sommation des composantes droite et gauche (Sed, Seg) de ce signal d'erreur (Se).

10. Machine agricole suivant la revendication 8 considérée dans son rattachement à la revendication 1, **caractérisée en ce qu'**elle comprend au moins un ski (7) relié au châssis (1) de façon articulée pour glisser librement sur le sol (T) dans la direction d'avancement (X), **en ce que** le premier moyen (3) d'estimation de niveau ou d'inclinaison comprend un premier inclinomètre (37) lié au châssis (1) et fournissant, en tant que premier signal (S1), un signal variant avec l'inclinaison du châssis (1) dans un plan vertical parallèle à la direction d'avancement (X), et **en ce que** le deuxième moyen (4) d'estimation de niveau ou d'inclinaison comprend un deuxième inclinomètre (47) lié au ski (7) et fournissant, en tant que deuxième signal (S2), un signal variant avec l'inclinaison du ski (7) dans le plan vertical parallèle à la direction d'avancement (X).

11. Machine agricole suivant l'une quelconque des revendications 9 et 10, **caractérisée en ce que** l'unité de calcul (50) comprend des moyens (503) pour élaborer une consigne (C) au moins par filtrage basse fréquence dudit signal d'erreur (Se), et **en ce que** le moyen de réglage asservi (5) comprend des organes effecteurs (51) pilotés par ladite unité de calcul (50) et produisant ladite commande (K) en fonction de ladite consigne (C).
